# EUROPÄISCHE PATENTANMELDUNG

(11) **EP 1 431 877 A2**
(43) Veröffentlichungstag der Anmeldung: **23.06.2004**
(21) Anmeldenummer: 03020072.9
(22) Anmeldetag: 04.09.2003
(51) Int. Cl.: G06F 11/32

(54) **Parametrier-/Diagnosesystem für Feldgeräte**

(30) Priorität: 20.09.2002 DE 10243782
(71) Anmelder: Sick AG, 79183 Waldkirch, Breisgau (DE)
(72) Erfinder: Fehrer, Detlef, Dr., 79194 Gundelfingen (DE); Stadler, Edgar, 79312 Emmendingen (DE); Vollmer, Urs, 79104 Freiburg (DE)
(74) Vertreter: Manitz, Finsterwald & Partner GbR

(57) **Zusammenfassung**

Es wird ein System für die Diagnose und/oder Parametrierung von an einem Bussystem angeschlossenen, Sensoren, Aktoren oder Steuerungen bildenden Geräten beschrieben, mit dem Geräteparameter aus dem Gerät auslesbar und/oder in das Gerät übertragbar sind sowie ausgelesene und/oder zu übertragende Geräteparameter durch eine Anzeigeeinheit visuell darstellbar sind. Das System umfasst einen Kommunikationsabschnitt zur Kommunikation, d. h. zum Auslesen und/oder Übertragen von Geräteparametern, des Systems mit dem Gerät sowie einen von dem Kommunikationsabschnitt getrennten Visualisierungsabschnitt zur Visualisierung der Geräteparameter durch die Anzeigeeinheit. Der Kommunikationsabschnitt und der Visualisierungsabschnitt sind zum Datenaustausch über geräteunabhängige Schnittstellen miteinander verbunden. Weiterhin ist der Kommunikationsabschnitt unabhängig von der verwendeten Anzeigeeinheit ausgebildet.

## Beschreibung

Die vorliegende Erfindung betrifft ein System für die Diagnose und/oder Parametrierung von an einem Bussystem angeschlossenen, Sensoren, Aktoren oder Steuerungen bildenden Geräten, mit dem Geräteparameter aus dem Gerät auslesbar und/oder in das Gerät übertragbar sind sowie ausgelesene und/oder zu übertragende Geräteparameter durch eine Anzeigeeinheit visuell darstellbar sind.

In der Automatisierungstechnik werden bei der Diagnose und/oder Parametrierung von Feldgeräten üblicherweise Systeme in Form von PCbasierten Programmen (Engineering Tools) verwendet. Diese Systeme kommunizieren über eine vorgegebene, meist standardisierte Kommunikationstechnologie (serielle Schnittstelle, Ethernet, PROFIBUS usw.) mit dem jeweiligen Gerät und stellen an der Anzeigeeinheit, üblicherweise an dem direkt am PC angeschlossenen Bildschirm, eine benutzerfreundliche, graphische Visualisierung zur Verfügung, die am Gerät selbst in der Regel nicht möglich ist. Diese Visualisierung stellt beispielsweise aus dem Gerät ausgelesene Parameter in graphischer, tabellarischer oder numerischer Weise am Bildschirm dar und stellt ggf. Eingabemasken zur Verfügung, über die entsprechende Geräteparameter eingegeben und zur Parametrierung an das jeweilige Gerät übertragen werden können.

Soll die Visualisierung nicht in unmittelbarer Nähe des Feldgerätes erfolgen, da sich die Bedienperson beispielsweise weit entfernt von dem Feldgerät befindet, so ist es auch möglich, die Feldgeräte über Webzugriffe mittels HTTP (auf Ethernet oder anderer Trägertechnologie) anzusteuern. Dazu ist es erforderlich, dass der Datenserver in unmittelbarer Nähe beim Feldgerät angeordnet und beispielsweise über eine lokale Schnittstelle mit diesem verbunden ist, während die Webzugriffe über HTTP von einem entfernt liegenden Client durchgeführt werden können.

Problematisch an den bisher bekannten Lösungen ist, dass zwar eine Vielzahl von unterschiedlichen Systemen existieren, die jeweils für unterschiedliche Anwendungsszenarien verwendbar sind, diese unterschiedlichen Systeme jedoch keine gemeinsame Architektur besitzen. Dies führt dazu, dass sich die bekannten Systeme je nach Anwendungsszenario dem Anwender in verschiedenen Visualisierungs- und Bedienkonzepten darstellen. Der Benutzer muss somit je nach Anwendungsszenario sich oftmals vollständig neu in das jeweilige verwendete System einarbeiten, wodurch die Wahrscheinlichkeit für Bedienfehler erhöht wird. Weiterhin entstehen oftmals Versionskonflikte zwischen der Gerätesoftware und der Parametriersoftware, da diese meist unabhängig voneinander entwickelt sind und bei einer Änderung des Anwendungsszenarios Versionssprünge in den verwendeten Softwaremodulen oftmals nicht berücksichtigt sind. Letztlich ist eine Parametrierung ohne Technologiebrücke meist nur lokal am Feldgerät möglich, beispielsweise über den Anschluss eines Laptops, bzw. maximal nur soweit, wie sich das Bussystem in der verwendeten Anlage erstreckt.

Es ist eine Aufgabe der Erfindung, ein System der eingangs genannten Art so auszubilden, dass für eine Vielzahl von unterschiedlichen Anwendungsszenarien die Bedienung und Visualisierung des Diagnoseund/oder Parametriersystems für alle Feldgeräte möglichst einheitlich ist. Weiterhin soll eine Migration des Systems von einem Anwendungsszenario in ein anderes Anwendungsszenario ohne großen Aufwand möglich sein.

Ausgehend von einem System der eingangs genannten Art wird diese Aufgabe erfindungsgemäß dadurch gelöst, dass das System einen Kommunikationsabschnitt zur Kommunikation, d. h. zum Auslesen und/oder Übertragen von Geräteparametern, des Systems mit dem Gerät sowie einen von dem Kommunikationsabschnitt getrennten Visualisierungsabschnitt zur Visualisierung der Geräteparameter durch die Anzeigeeinheit umfasst, wobei der Kommunikationsabschnitt und der Visualisierungsabschnitt zum Datenaustausch über geräteunabhängige Schnittstellen miteinander verbunden sind und der Kommunikationsabschnitt unabhängig von der verwendeten Anzeigeeinheit ausgebildet ist.

Erfindungsgemäß erfolgt somit eine strenge Aufteilung des Systems in zwei voneinander getrennte Abschnitte, wobei der Kommunikationsabschnitt den vom jeweiligen Anwendungsszenario unabhängigen Kern kapselt, wohingegen der Visualisierungsabschnitt vom Anwendungsszenario abhängig ist. Mögliche Szenarien sind im Rahmen dieser Anmeldung beispielsweise ein Stand-alone Szenario, ein Tool-Server Szenario und ein Embedded Webserver Szenario, wie im Folgenden näher beschrieben werden.

Beim Stand-alone Szenario ist das System vorteilhaft in eine insbesondere als Personal Computer ausgebildete Steuereinheit integriert, wobei-die Anzeigeeinheit durch ein direkt mit der Steuereinheit verbundenes Display der Steuereinheit gebildet wird. Das Engineering Tool kann somit auf einem PC laufen, der lokal beim Feldgerät angeordnet ist, wobei die Visualisierung direkt auf dem Bildschirm des PCs zur Verfügung gestellt wird.

Der Visualisierungsabschnitt kann dabei bevorzugt als Modul ausgebildet sein, das unmittelbar im PC ausgeführt wird.

Beim Tool-Server-Szenario ist vorteilhaft das System in eine insbesondere als Personal Computer ausgebildete Steuereinheit integriert, wobei die Anzeigeeinheit durch einen weiteren Computer mit Display (Anzeigecomputer) gebildet wird, der über eine Netzverbindung mit der Steuereinheit verbunden ist. In diesem Fall kann das Engineering Tool somit auf einem PC laufen, der lokal beim Feldgerät angeordnet ist, wobei die Visualisierung, welche die gleiche ist wie beim Stand-alone Szenario, beispielsweise über einen Webserver mittels HTTP einem weit entfernten Client angeboten wird. Dies kann beispielsweise über ein Intranet oder auch über das Internet erfolgen. Auf diese Weise ist eine transparente Fernwartung möglich, d. h., dass die lokale Bedienung die gleiche Bildschirmschnittstelle besitzt wie ein Fernzugriff. Die Netzverbindung kann dabei vorteilhaft durch eine standardisierte Netzverbindung, insbesondere durch eine Ethernetverbindung oder einen Feldbus (z.B. Profibus, DeviceNet, Can basierender Feldbus) realisiert sein.

Der Visualisierungsabschnitt (Anzeige-Frontend) kann dabei als Modul, insbesondere als Applet implementiert sein, das zur Visualisierung der Geräteparameter über die Netzverbindung in den Anzeigecomputer ladbar und in einem auf dem Anzeigecomputer vorhandenen Client, insbesondere einem Internetbrowser ausführbar ist.

Beim Embedded Webserver Szenario ist vorteilhaft das System in das Feldgerät selbst integriert, wobei die Anzeigeeinheit durch einen Computer mit Display (Anzeigecomputer) gebildet wird, der über eine Netzverbindung mit dem Gerät verbunden ist. Auch hier kann die Netzverbindung vorteilhaft durch eine standardisierte Netzverbindung, insbesondere durch eine Ethernetverbindung oder einen Feldbus (z.B. Profibus, DeviceNet, Can basierender Feldbus) realisiert sein.

In diesem Fall kann somit ein geeignetes Feldgerät das gesamte Engineering Tool in sich aufnehmen und dessen Visualisierung nach außen beispielsweise über einen Webserver zur Verfügung stellen. Dieser Webserver wird in diesem Fall direkt in das Gerät integriert. Die Visualisierung ist in diesem Fall identisch der Visualisierung beim Stand-alone Szenario und auch beim Tool-Server Szenario. Vorteilhaft an dem Embedded Webserver Szenario ist dabei, dass alle Versionskonflikte zwischen Gerät und Engineering Tool entfallen, da die gesamte Gerätelogik einschließlich Engineering Tool in dem Gerät selbst konzentriert sind.

Der Visualisierungsabschnitt kann dabei, identisch wie beim Tool-Server Szenario als ladbares Modul, insbesondere als Applet realisiert sein, das zur Visualisierung der Geräteparameter über die Netzverbindung in den Anzeigecomputer ladbar und in einem auf dem Anzeigecomputer vorhandenen Client, insbesondere einem Internetbrowser ausführbar ist. Der im Kommunikationsabschnitt enthaltene Toolkern kann unmittelbar im Gerät beispielsweise in einer Embedded-Java-Umgebung realisiert sein.

Nach einer vorteilhaften Ausführungsform der Erfindung sind zwischen dem Kommunikationsabschnitt und dem Visualisierungsabschnitt Schnittstellen vorgesehen, die für alle Szenarien identisch sind. Die eigentlichen Daten liegen im Kommunikationsabschnitt, wobei insbesondere vier Hauptschnittstellen zwischen dem Kommunikationsabschnitt und dem Visualisierungsabschnitt vorgesehen sind. Diese Hauptschnittstellen, die für alle Szenarien identisch sind, umfassen Schnittstellen zum Kern, zum eigentlichen Geräteobjekt, zu den Geräteparametern und zur Projektverwaltung über mehrere Geräte.

Der beim Tool-Server Szenario und beim Embedded Webserver Szenario verwendete Netzwerkkanal ist transparent, d. h. er ist für die darüber transportierten Daten unsichtbar. Über den transparenten Netzwerkkanal werden die Business- und Präsentationsschicht, d. h. der Kommunikationsabschnitt und der Visualisierungsabschnitt, miteinander verbunden. Die Transparenz des Netzwerkkanals wird dadurch erreicht, dass auf beiden Seiten des Kanals die gleiche Schnittstelle angeboten wird, die auch im Stand-alone Szenario zwischen den übertragenen Datenpaketen liegt. Auf diese Weise ist gewährleistet, dass unabhängig vom jeweils vorliegenden Szenario die Kommunikation zwischen dem Kommunikationsabschnitt und dem Visualisierungsabschnitt identisch ist. Im Stand-alone Szenario sind durch die Implementierung des Kommunikationsabschnittes sowie des Visualisierungsabschnittes im gleichen PC diese unmittelbar miteinander verbunden, so dass hier kein Netzwerkkanal vorhanden ist.

Mit der Erfindung wird erreicht, dass ein erfindungsgemäß ausgebildetes System eine identische Visualisierung besitzt, unabhängig auf welcher Plattform oder in welchem Anwendungsszenario das System ausgeführt wird. Weiterhin ist durch die Isolierung und Entkoppelung des Kommunikationsabschnittes (Gerätekomponente) gewährleistet, dass diese unverändert in die verschiedenen Architekturen integriert bzw. migriert werden kann. Durch die Entkoppelung des Visualisierungsabschnittes ist wiederum erreicht, dass eine einheitliche Visualisierung für unterschiedliche Geräte gegeben ist. Der das Kernpaket darstellende Kommunikationsabschnitt des jeweiligen Gerätes, ggf. mit Businesslogik, bleibt durch die Entkoppelung unabhängig und unverändert für jedes Anwendungsszenario.

Weitere vorteilhafte Ausführungsformen sind in den Unteransprüchen angegeben.

Die Erfindung wird nachfolgend anhand von Ausführungsbeispielen unter Bezugnahme auf die Zeichnungen näher beschrieben, in diesen zeigen:
- Figur 1: eine erste Ausführungsform der Erfindung in einem so genannten Stand-alone Szenario,
- Figur 2: eine zweite Ausführungsform der Erfindung in einem Tool-Server Szenario und
- Figur 3: eine dritte Ausführungsform der Erfindung in einem Embedded Webserver Szenario.

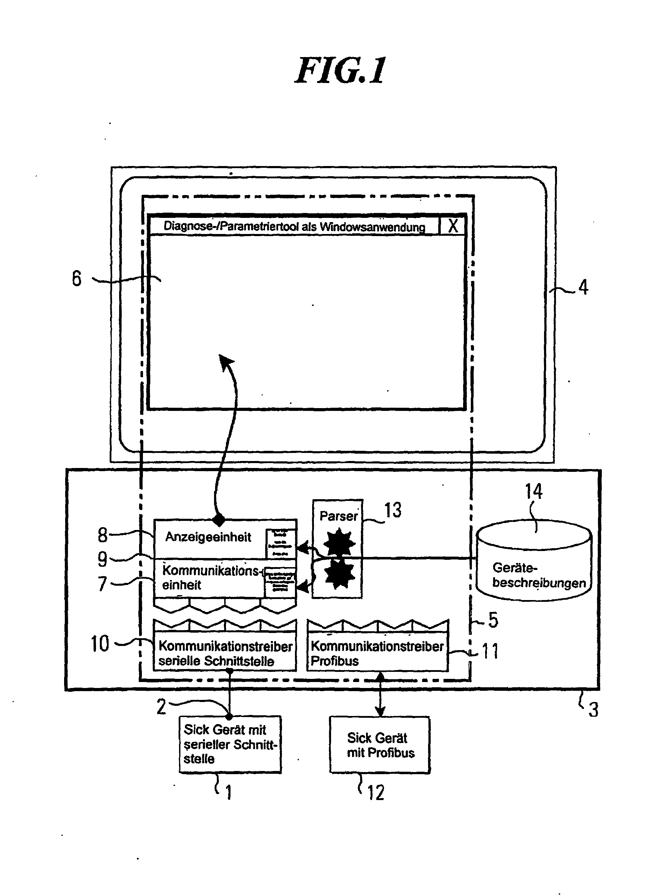

Figur 1 zeigt ein als Sensor, Aktor oder Steuerung ausgebildetes Feldgerät 1, das über eine serielle Schnittstelle 2 mit einer als Personal Computer 3 ausgebildeten Steuereinheit verbunden ist. Der Personal Computer 3 ist in üblicher Weise mit einem Bildschirm 4 sowie nicht dargestellten Eingabegeräten (Tastatur, Maus) verbunden.

In dem Personal Computer 3 ist ein Diagnose-/Parametriertool (Engineering Tool) 5 installiert, das beispielsweise als Windows-Anwendung ausgebildet ist und über ein auf dem Bildschirm 4 dargestelltes Benutzerinterface 6 Ein- oder Ausgaben ermöglicht. Das Engineering Tool 5 umfasst einen Kommunikationsabschnitt 7 und einen davon getrennt ausgebildeten Visualisierungsabschnitt 8, die über nicht näher dargestellte Schnittstellen 9 kommunizieren. In dem Kommunikationsabschnitt 7. ist die eigentliche Gerätelogik (Businesslogik) implementiert, wobei gleichzeitig keine für die Visualisierung an dem Bildschirm 4 erforderlichen Teile in dem Kommunikationsabschnitt 7 enthalten sind. Die für die Visualisierung erforderlichen Teile sind vollständig in dem Visualisierungsabschnitt 8 implementiert. Im Falle des in Figur 1 dargestellten Stand-alone Szenarios ist dabei der Visualisierungsabschnitt 8 als Frame ausgeführt.

Das Engineering Tool 5 umfasst weiterhin eine Kommunikationsschnittstelle 10 für die Kommunikation über die serielle Schnittstelle 2 mit dem Feldgerät 1. Grundsätzlich können noch mehrere Kommunikationsschnittstellen für unterschiedliche Anwendungen von unterschiedlichen Feldgeräten vorgesehen sein. So ist in Figur 1 beispielsweise auch eine Kommunikationsschnittstelle 11 für die Anbindung eines Feldgerätes 12 mit PROFIBUS-Anschluss dargestellt.

Weiterhin umfasst das Engineering Tool 5 einen Parser 13, durch den eine im Speicher des Personal Computers 3 abgelegte Gerätebeschreibung 14 ausgelesen und für die Verarbeitung aufbereitet wird.

Bei dem in Figur 1 dargestellten Stand-alone Szenario laufen somit sowohl der Kommunikationsabschnitt 7 als auch der Visualisierungsabschnitt 8 zusammen in dem Personal Computer 3. Dieser Personal Computer muss in räumlicher Nähe der Geräte 1 und 12 vorgesehen sein, da nur in diesem Fall der Anschluss über die serielle Schnittstelle 2 bzw. den PROFIBUS möglich ist.

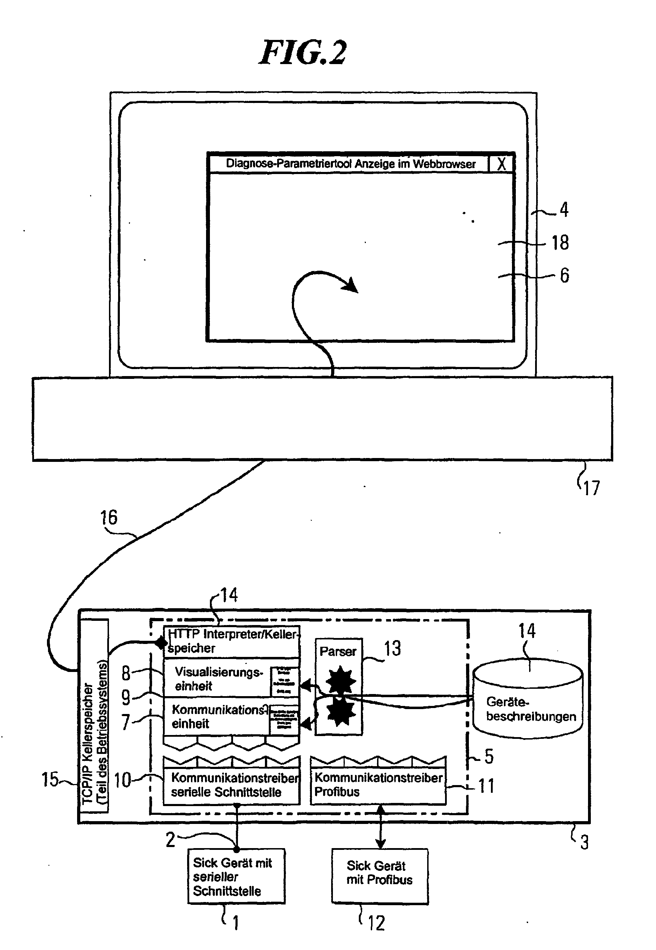

Demgegenüber stellt die in Figur 2 dargestellte Anordnung das so genannte Tool-Server Szenario dar. Bei diesem Tool-Server Szenario ist grundsätzlich auch in unmittelbarer Nähe der zu steuernden Geräte eine Steuereinheit in Form eines Personal Computers vorgesehen, die Anzeigeeinheit ist jedoch wahlweise ebenfalls in unmittelbarer Nähe oder weit entfernt von den zu steuernden Geräten angeordnet. Dabei sind in der folgenden Beschreibung der Figur 2 für gleiche Elemente wie in Figur 1 die gleichen Bezugszeichen verwendet.

Das in Figur 2 gezeigte Tool-Server Szenario unterscheidet sich von dem Stand-alone Szenario nach Figur 1 dadurch, dass der Visualisierungsabschnitt 8 zusätzlich einen Webserver 14 umfasst, der die Visualisierung über einen transparenten Netzwerkkanal 15, beispielsweise einen TCP/IP Stack, einem weit entfernt angeordneten Client (Webbrowser) anbietet. Die Datenübertragung erfolgt dabei beispielsweise über ein Intranet oder das Internet 16, wobei der Client in üblicher Weise auf einem'als Anzeigecomputer 17 fungierenden Personal Computer mit Anschluss an das Intranet/Internet 16 installiert ist.

Der Visualisierungsabschnitt 8 kann in diesem Fall als Applet ausgebildet sein (beispielsweise als Java-Applet), das über das Intranet/Internet 16 im Bedarfsfall auf den Anzeigecomputer 17 geladen wird und von dem Browser 18 zur Visualisierung der Geräteparameter verwendet wird.

Der Kommunikationsabschnitt 7 ist bei der Ausführungsform nach Figur 2 identisch zu dem Kommunikationsabschnitt 7 nach Figur 1 ausgebildet, so dass die eigentliche Businesslogik unabhängig von dem jeweiligen Anwendungsszenario immer identisch ist. Die Visualisierungsabschnitte 8 sind bei den unterschiedlichen Anwendungsszenarien so implementiert, dass letztlich das Benutzerinterface 6 unabhängig vom Anwendungsszenario für den Benutzer identisch ist.

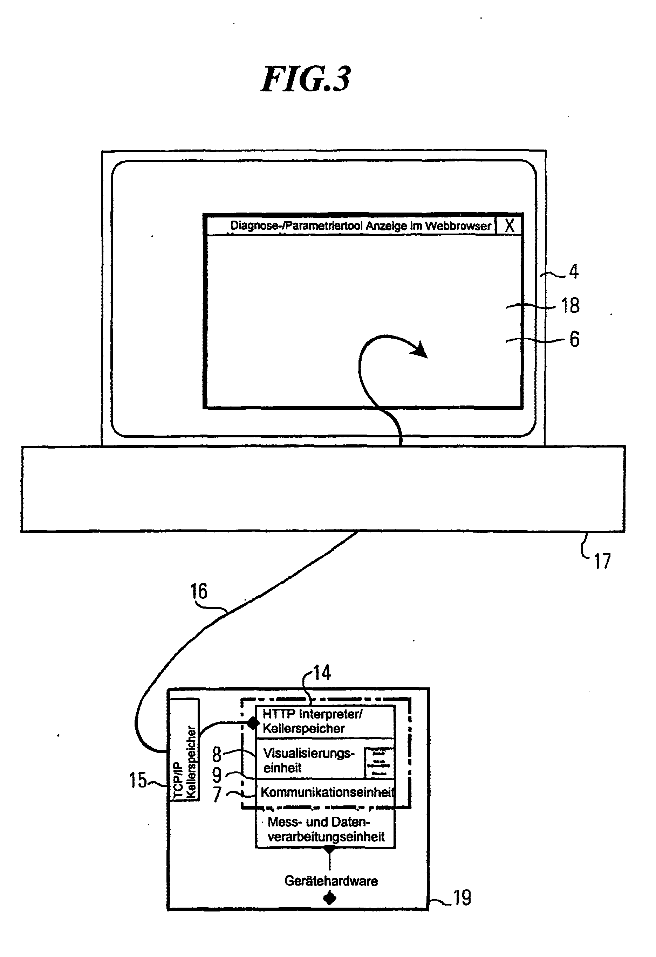

Dies gilt ebenfalls für das in Figur 3 dargestellte Embedded Webserver Szenario. Hier ist gegenüber dem Ausführungsbeispiel nach Figur 2 das gesamte Engineering Tool 5 unmittelbar in das Gerät 19 selbst integriert. Wie beim Tool-Server Szenario nach Figur 2 erfolgt auch beim Embedded Webserver Szenario nach Figur 3 die Visualisierung über einen in dem Visualisierungsabschnitt 8 vorhandenen Webserver. Auf diese Weise wird erreicht, dass die letztlich auf einem entfernt über beispielsweise das Intranet/Internet 16 angebundenen Anzeigecomputer 17 eine zu den Ausführungsbeispielen nach Figur 1 und Figur 2 identische Visualisierung und damit Benutzerschnittstelle 6 erreicht wird. Der Kommunikationsabschnitt 7 kann dabei, wie in Fig. 3 dargestellt, als von der Businesslogik 20 getrennter Abschnitt ausgebildet sein. Es ist aber auch möglich, den Kommunikationsabschnitt 7 direkt in die Businesslogik 20 zu integrieren, so dass der Kommunikationsabschnitt 7 als Teil der Businesslogik 20 ausgebildet ist. In beiden Ausführungsformen sind die Businesslogik des Gerätes und der Kommunikationsabschnitt unmittelbar in dem Gerät integriert, so dass bei diesem Szenario alle Versionskonflikte zwischen Gerät und Engineering Tool entfallen.

### Bezugszeichenliste

- 1: Feldgerät
- 2: serielle Schnittstelle
- 3: Personal Computer
- 4: Bildschirm
- 5: Engineering Tool
- 6: Benutzerinterface
- 7: Kommunikationsabschnitt
- 8: Visualisierungsabschnitt
- 9: Schnittstellen
- 10: Kommunikationsschnittstelle seriell
- 11: Kommunikationsschnittstelle PROFIBUS
- 12: Feldgerät PROFIBUS
- 13: Parser
- 14: Webserver
- 15: transparenter Netzwerkkanal
- 16: Intranet/Internet
- 17: Anzeigecomputer
- 18: Client
- 19: Feldgerät
- 20: Businesslogik

## Patentansprüche

1. System für die Diagnose und/oder Parametrierung von an einem Bussystem angeschlossenen, Sensoren, Aktoren oder Steuerungen bildenden Geräten (1, 12, 19), mit dem Geräteparameter aus dem Gerät (1, 12, 19) auslesbar und/oder in das Gerät (1, 12, 19) übertragbar sind sowie ausgelesene und/oder zu übertragende Geräteparameter durch eine Anzeigeeinheit (4; 17, 4) visuell darstellbar sind,
**dadurch gekennzeichnet,**
**dass** das System einen Kommunikationsabschnitt (7) zur Kommunikation, d.h. zum Auslesen und/oder Übertragen von Geräteparametern, des Systems mit dem Gerät (1, 12, 19) sowie einen von dem Kommunikationsabschnitt (7) getrennten Visualisierungsabschnitt (8) zur Visualisierung der Geräteparameter durch die Anzeigeeinheit (4; 17, 4) umfasst, wobei der Kommunikationsabschnitt (7) und der Visualisierungsabschnitt (8) zum Datenaustausch über geräteunabhängige Schnittstellen (9) miteinander verbunden sind und der Kommunikationsabschnitt (7) unabhängig von der verwendeten Anzeigeeinheit (4; 17, 4) ausgebildet ist.

2. System nach Anspruch 1,
**dadurch gekennzeichnet,**
**dass** das System in eine insbesondere als Personalcomputer ausgebildete Steuereinheit (3) integriert ist und die Anzeigeeinheit durch ein direkt mit der Steuereinheit (3) verbundenes Display (4) der Steuereinheit (3) gebildet wird.

3. System nach Anspruch 1,
**dadurch gekennzeichnet,**
**dass** das System in eine insbesondere als Personalcomputer ausgebildete Steuereinheit (3) integriert ist und die Anzeigeeinheit durch einen weiteren Computer (17) mit Display (4) (Anzeigecomputer) gebildet wird, der über eine Netzverbindung (15, 16) mit der Steuereinheit (3) verbunden ist.

4. System nach Anspruch 1,
**dadurch gekennzeichnet,**
**dass** das System in das Gerät ( 19) integriert ist und die Anzeigeeinheit durch einen Computer (17) mit Display (4) (Anzeigecomputer) gebildet wird, der über eine Netzverbindung (15, 16) mit dem Gerät (19) verbunden ist.

5. System nach Anspruch 3 oder 4,
**dadurch gekennzeichnet,**
**dass** die Netzverbindung (15, 16) durch eine standardisierte Netzverbindung, insbesondere durch eine Ethernetverbindung oder einen Feldbus (z.B. Profibus, DeviceNet, CAN basierender Feldbus) gebildet wird.

6. System nach Anspruch 3, 4 oder 5,
**dadurch gekennzeichnet,**
**dass** der Visualisierungsabschnitt (8) einen Webserver (14) umfasst.

7. System nach irgendeinem der Ansprüche 3 bis 6,
**dadurch gekennzeichnet,**
**dass** der Visualisierungsabschnitt (8) ein Modul, insbesondere ein Applet umfasst, das zur Visualisierung der Geräteparameter über die Netzverbindung (15, 16) in den Anzeigecomputer (17) ladbar und in einem auf dem Anzeigecomputer (17) vorhandenen Client (18), insbesondere einem Internetbrowser ausführbar ist.

8. System nach irgendeinem der vorhergehenden Ansprüche,
**dadurch gekennzeichnet,**
**dass** zwischen dem Kommunikationsabschnitt (7) und dem Visualisierungsabschnitt (8) Schnittstellen (9) für Kernfunktionalität und/oder Geräteobjekt und/oder Geräteparameter und/oder Projektverwaltung vorgesehen sind.

9. System nach irgendeinem der vorhergehenden Ansprüche,
**dadurch gekennzeichnet,**
**dass** der Kommunikationsabschnitt (7) getrennt von der Businesslogik (20) des Geräts (1, 12, 19) ausgebildet ist.

10. System nach irgendeinem der Ansprüche 4 und 5 bis 8,
**dadurch gekennzeichnet,**
**dass** der Kommunikationsabschnitt (7) in die Businesslogik (20) des Geräts (1, 12, 19) integriert ist.

11. System nach irgendeinem der vorhergehenden Ansprüche,
**dadurch gekennzeichnet,**
**dass** durch den Visualisierungsabschnitt (8) unabhängig von der verwendeten Anzeigeeinheit (4; 17, 4) im wesentlichen eine identische Visualisierung durch die jeweilige verwendete Anzeigeeinheit (4; 17, 4) erfolgt.
